(19) Europäisches Patentamt
European Patent Office
Office européen des brevets

(11) **EP 4 070 057 B1**

(12) **FASCICULE DE BREVET EUROPEEN**

(45) Date de publication et mention
de la délivrance du brevet:
**25.10.2023 Bulletin 2023/43**

(21) Numéro de dépôt: **21705238.0**

(22) Date de dépôt: **07.01.2021**

(51) Classification Internationale des Brevets (IPC):
**G01K 7/18** *(2006.01)*      **G01K 15/00** *(2006.01)*

(52) Classification Coopérative des Brevets (CPC):
**G01K 7/18; G01K 7/186; G01K 15/005**

(86) Numéro de dépôt international:
**PCT/FR2021/050014**

(87) Numéro de publication internationale:
**WO 2021/140298 (15.07.2021 Gazette 2021/28)**

(54) **CAPTEUR DE TEMPÉRATURE A RÉSISTANCE A PRÉCISION AUGMENTÉE**

RESISTIVER TEMPERATURSENSOR MIT ERHÖHTER GENAUIGKEIT

RESISTIVE TEMPERATURE SENSOR OF INCREASED ACCURACY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2020 FR 2000235**

(43) Date de publication de la demande:
**12.10.2022 Bulletin 2022/41**

(73) Titulaire: **Commissariat à l'Energie Atomique et aux Energies Alternatives
75015 Paris (FR)**

(72) Inventeur: **CONSTANTIN, Olivier
38054 GRENOBLE Cedex 09 (FR)**

(74) Mandataire: **Brevalex
Tour Trinity
1 B Place de la Défense
92400 Courbevoie (FR)**

(56) Documents cités:
**US-A- 5 623 594**

**Description**

## DOMAINE TECHNIQUE ET ÉTAT DE LA TECHNIQUE ANTÉRIEURE

La présente invention se rapporte à un capteur de température à résistance, à précision augmentée.

Un capteur de température à résistance ou RTD (Résistance Thermal Detector) est un capteur de température basé sur une résistance dont la valeur de résistance varie en fonction de la température. Le changement de résistance électrique en fonction de la variation de température est connu, de sorte que le capteur peut produire une mesure précise des changements de température. Les capteurs de température à résistance sont couramment utilisés dans les applications de laboratoire et industrielles, car ils fournissent des mesures précises et fiables sur une large plage de températures.

La détermination de la température avec un capteur de température à résistance est basée sur la formule suivante :

$$R = R_0 \left(1 + \alpha \left(T - T_0\right)\right)$$

où R est la résistance mesurée à la température T qui est la température que l'on veut déterminer, $R_0$ la résistance mesurée à la température $T_0$, qui est la température de calibration, généralement 0°C, et $\alpha$ un coefficient spécifique du matériau résistif utilisé, appelé TCR (Température Coefficient of Résistance).

Le matériau conducteur utilisé est généralement choisi pour :

- avoir une relation linéaire résistance/température sur la gamme de température mesurée, et
- avoir un coefficient $\alpha$ le plus élevé possible.

Dans le domaine biologique, on cherche à connaître précisément la température sur une gamme de température réduite, comme cela est décrit dans le document Liu et al. "Thermal Control Microsystem for Protein Characterization and Sensing", Xiaowen Liu, Lin Li and Andrew J. Mason, 2009 IEEE Biomédical Circuits and Systèmes Conférence pp 277-280, qui décrit un microsystème de contrôle de la température d'un environnement pour la caractérisation de protéines. Ce microsystème comporte une microplaque chauffante et un contrôleur PIDs qui corrige l'erreur entre la température mesurée et la température cible. Ce dispositif est relativement complexe, en cela qu'il intègre deux couches de silicium pouvant nécessiter d'être planarisées pour empiler l'élément chauffant et le capteur de température. De plus, l'imprécision de température cible est par essence liée à l'imprécision de mesure du capteur, les écarts pouvant être liés à la précision de fabrication de ce dernier n'étant pas compensés.

La gamme de température d'intérêt pour les cellules biologiques permet d'utiliser dans cet exemple le silicium, pour réaliser le conducteur électrique formant la résistance. En effet la variation de résistance du silicium en fonction de la température est sensiblement linéaire dans la gamme de température d'intérêt. La résistance est alors formée par une piste conductrice, dont la valeur de la résistance est définie par les dimensions de la piste, sa longueur, sa largeur et son épaisseur, et par la température.

Le procédé de fabrication mis en oeuvre pour réaliser de tels capteurs utilise les techniques de la microélectronique, i.e. dépôt de couches, formation de masque et gravure. La piste de silicium destinée à former la résistance est formée par gravure, généralement par gravure chimique. La gravure détermine la largeur de la piste.

Les capteurs sont réalisés de manière collective sur un substrat ou « wafer ». Or la gravure n'est pas uniforme sur toute la surface du substrat. Ainsi la largeur de la piste formant résistance va varier entre les capteurs issus d'un même substrat. Il est alors nécessaire de calibrer chaque capteur. Un tel calibrage systématique est long, ce qui augmente le temps de fabrication d'un capteur.

Le document Peled et al. « Quantifying delineation errors in thin film resistors I : Evaluation of line width errors for résistance measurement », in Thin Solid Films (1982) L77-L81 décrit le problème de surgravure.

US 5 623 594 A concerne un capteur de température à résistance comprenant une seule piste conductrice dont la résistance dépend de la température. Le document divulgue des mesures de la résistance en fonction d'une sur- et sous-gravure.

## EXPOSÉ DE L'INVENTION

C'est par conséquent un but de la présente invention d'offrir un capteur de température permettant de s'affranchir d'une étape de calibration individuelle.

Le but énoncé ci-dessus est atteint par un capteur de température à résistance comportant au moins une piste conductrice électrique en un matériau dont on connaît la variation de résistance en fonction de la température dans la gamme de température donnée, et au moins deux zones de mesure sensiblement de même longueur et de largeur différente situées proches l'une de l'autre et des moyens pour mesurer des résistances des au moins deux zones de mesure.

Le capteur de température comporte deux zones de mesure géographiquement proches, on peut alors faire l'hypothèse qu'elles ont été soumises à sensiblement la même surgravure. Les deux zones de mesure permettent de déterminer la surgravure spécifique à chaque capteur, de calculer la résistance à une température de calibration et de déterminer la température.

En d'autres termes, on intègre au capteur de température des moyens d'autocorrection de la surgravure. Ces moyens comportent deux zones structurées de sorte à permettre de déterminer la surgravure pour chaque capteur et ainsi assurer une autocorrection de la surgravure.

Il en résulte que, puisque la non-homogénéité de la gravure n'est plus problématique, une calibration individuelle des capteurs n'est plus requise et qu'une calibration pour déterminer la résistivité du matériau faite à partir d'un seul capteur d'un lot est ensuite appliquée aux autres capteurs du lot est suffisante.

Le capteur comporte au moins une zone permettant la détermination de la surgravure et au moins une zone permettant la mesure de température, la zone de détermination de la surgravure pouvant être inclus dans la zone permettant la mesure de température, confondue avec celle-ci ou distincte de celle-ci.

De manière très avantageuse, les mesures de résistance se font par une mesure de type 4-pointes en faisant circuler un courant et en mesurant des tensions.

Dans un exemple de réalisation, le capteur comporte deux pistes conductrices disposées à proximité l'une de l'autre, chaque piste comportant une zone de mesure.

Dans un autre exemple de réalisation, le capteur comporte une seule piste conductrice, les deux zones étant formées par deux portions successives de la piste conductrice.

De préférence, chaque zone présente une résistance d'au moins 1$\Omega$.

Le procédé ce calibrage d'un lot de capteurs peut comporter les étapes suivantes :
Un capteur du lot de capteurs est sélectionné.

On mesure précisément la largeur et l'épaisseur de l'une ou des zones de compensation de surgravure ou de mesure de température sur ce capteur.

Pour chaque capteur du lot, on mesure les résistances des deux zones de compensation de surgravure, desquelles on déduit la surgravure spécifique à chaque capteur.

On calcule ensuite, pour chaque capteur, la résistance d'au moins une zone de mesure de température à la température de calibration connaissant la résistivité à cette température et la surgravure. La valeur de cette résistance est enregistrée dans les moyens de calcul du capteur.

Pour effectuer une mesure, on mesure la résistance d'au moins une zone de mesure de température et on en déduit la température connaissant la résistance à la température de calibration.

On peut mesurer également la résistance à la température de calibration de l'une ou des deux zones de compensation de surgravure ou de mesure de température, de laquelle on peut déduire la valeur de la résistivité, lorsque celle-ci n'est pas connue.

La présente invention a alors pour objet un capteur de température à résistance comportant au moins une piste conductrice électrique entre une première borne et une deuxième borne, lesdites bornes étant destinées à être connectées à une source de courant, ladite piste conductrice comportant au moins une première zone de compensation de surgravure et une deuxième zone de compensation de surgravure, les première et deuxième zones de compensation de surgravure ayant sensiblement la même longueur conductrice et ayant des largeurs différentes, ladite piste conductrice comportant également au moins une première zone de mesure de température, des moyens configurés pour déterminer les résistances électriques des première et deuxième zones de compensation de surgravure, pour déterminer la surgravure entre les première et deuxième zone de compensation de surgravure à partir des valeurs des résistances électriques des première et deuxième zones de compensation de surgravure, pour calculer une résistance de la première zone de mesure de température à une température de calibration à partir de la valeur de la surgravure, pour déterminer la résistance de la première zone de mesure de température à la température à mesurer et pour calculer la température à partir de la résistance de la première zone de mesure de température à la température à mesurer.

Dans un exemple de réalisation, ladite piste comporte une deuxième zone de mesure de température, et les moyens de mesure sont configurés pour calculer la résistance de la deuxième zone de mesure de température à une température de calibration à partir de la valeur de la surgravure, pour mesurer la résistance de la deuxième zone de mesure de température à la température à mesurer et pour calculer la température à partir de la résistance de la deuxième zone de mesure de température à la température à mesurer.

La première zone de compensation de surgravure et la première zone de mesure peuvent être confondues, et la deuxième zone de compensation de surgravure et la deuxième zone de mesure peuvent être confondues.

De préférence, les première et deuxième zones de mesure ont sensiblement la même longueur conductrice et la même largeur.

La présente invention a également pour objet un capteur de température à résistance comportant une première piste conductrice électrique et une deuxième piste conductrice électrique, chacune s'étendant entre une première borne et une deuxième borne destinées à être connectées à une source de courant, la première piste conductrice comportant une première zone de compensation de surgravure et au moins une première zone de mesure de température, la deuxième piste comportant une deuxième zone de compensation de surgravure et au moins une deuxième zone de mesure de température, les première et deuxième zones de compensation de surgravure ayant sensiblement la même longueur conductrice et des largeurs conductrices différentes, les première et deuxième pistes étant disposées à proximité l'une de l'autre, ledit capteur comportant également des moyens de mesure configurés pour déterminer les résistances électriques des première et deuxième zones de compensation de surgravure, pour déterminer la surgravure des première et deuxième zone de compensation de surgravure à partir des valeurs des résistances électriques des première et deuxième zones de compensation de surgravure, pour calculer la résistance d'au moins la première zone de mesure de température à une température de calibration à partir de la valeur de la surgravure, pour déterminer la résistance de la première zone de mesure de température à la température à mesurer et pour calculer la température à partir de la résistance de la première zone de mesure de température à la température à mesurer.

Dans un exemple de réalisation, les moyens de mesure sont configurés pour calculer la résistance d'au moins la deuxième zone de mesure de température à une température de calibration à partir de la valeur de la surgravure, pour calculer une résistance de la deuxième zone de mesure de température à la température à mesurer et pour calculer la température à partir de la résistance de la deuxième zone de mesure de température à la température à mesurer.

Par exemple, la première piste comporte deux premières zones de mesure de température.

De préférence, les première et deuxième zones de compensation de surgravure sont parallèles et séparées d'une distance comprise entre 1 μm et 30 μm.

Par exemple, la première zone de compensation de température et la première zone de mesure de température sont confondues, et la deuxième zone de compensation de température et la deuxième zone de mesure de température sont confondues.

Au moins les première et deuxième zones de mesure de température sont avantageusement conformées pour présenter une longueur conductrice supérieure à la longueur en ligne droite de sorte à présenter une résistance électrique supérieure à la résistance électrique d'une zone en ligne droite.

Les premières et deuxièmes zones de mesure de température ont avantageusement une résistance électrique supérieure ou égale à 1Ω.

De préférence, les moyens de mesure sont configurés pour effectuer une mesure quatre pointes.

Le rapport entre la longueur d'une zone de compensation de surgravure et sa largeur est avantageusement supérieur à 15.

Le rapport entre les largeurs des première et deuxième zones de compensation de surgravure est avantageusement supérieur à 1,5.

La présente invention a également pour objet un procédé de mesure de température à partir d'un capteur de température selon l'invention, pour lequel la résistivité du matériau de la au moins une piste conductrice est connue et la valeur de la surgravure été déterminée, comportant :

- application d'un courant d'intensité donnée entre les première et deuxième bornes,
- mesure de la tension aux bornes de la au moins première zone de mesure,
- calcul de la résistance électrique de la au moins première zone de mesure à la température à mesurer,
- détermination de la température à partir de la résistance électrique de la au moins première zone de mesure à la température à mesurer, et à partir de la résistance électrique de la au moins première zone de mesure à une température de calibration et de la valeur de la surgravure.

La présente invention a également pour objet un procédé de calibrage d'un lot de capteurs de température à résistance selon l'invention, réalisés simultanément sur un substrat par des procédés microélectroniques, comportant :

- sélection d'un capteur du lot,
- mesure de la largeur et de l'épaisseur d'au moins une des zone de compensation de surgravure ou des zones de mesure de température,
- calcul des résistances des première et deuxième zones de compensation de surgravure pour chaque capteur du lot,
- calcul de la surgravure pour chaque capteur du lot à partir des résistances des première et deuxième zones de compensation de surgravure,
- calcul d'une résistance de calibration équivalente pour chaque capteur, à partie de la valeur de surgravure et de la résistivité,
- intégration dans les moyens de traitement de la résistance de calibration équivalente.

La présente invention a alors pour objet un procédé de fabrication d'un lot de capteurs selon l'invention, comportant :

- Réalisation du capteur par un procédé microélectronique pouvant comprendre des étapes de dépôt de couches, de photolithographie et de gravure,
- Application du procédé de calibrage selon la revendication précédente.

## BRÈVE DESCRIPTION DES DESSINS

La présente invention sera mieux comprise sur la base de la description qui va suivre et des dessins en annexe sur lesquels:

La figure 1 est une représentation schématique d'un capteur de température selon un exemple d'un premier mode de réalisation.

La figure 2 est une représentation schématique d'un capteur de température selon un autre exemple du premier mode de réalisation.

La figure 3 est une représentation schématique d'un capteur de température selon un autre exemple du premier mode de réalisation.

La figure 4 est une représentation schématique d'un capteur de température selon un exemple d'un deuxième mode de réalisation.

La figure 5 est une représentation schématique d'un capteur de température selon un exemple du deuxième mode de réalisation.

La figure 6 est une représentation schématique d'un capteur de température selon un exemple du deuxième mode de réalisation.

La figure 7 est une représentation schématique d'un capteur de température selon un exemple du deuxième mode de réalisation.

La figure 8 est une représentation schématique d'un capteur de température selon un exemple du premier mode de réalisation.

## EXPOSÉ DÉTAILLÉ DE MODES DE RÉALISATION PARTICULIERS

Les capteurs de température selon l'invention sont réalisés avec les techniques de la microélectronique à partir d'un substrat par dépôt de couches et gravures. De préférence les capteurs sont réalisés sur un substrat, généralement en forme de disque.

Dans la présente description, on utilise les mêmes lettres pour désigner les bornes du circuit électrique dans tous les modes de réalisation et tous les exemples de réalisation.

Par ailleurs, une lettre suivie d'un chiffre désigne les bornes du segment dont on veut mesurer effectivement la résistance et un chiffre suivi d'une lettre désigne les extrémités des connecteurs reliés aux bornes.

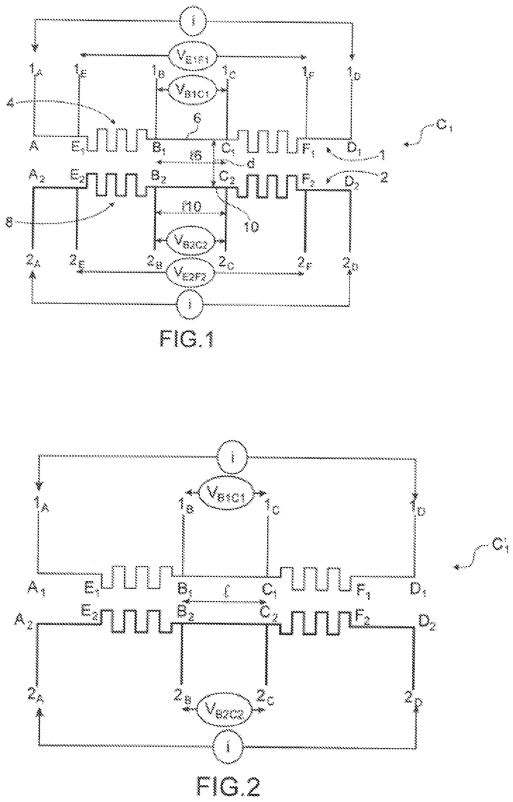

Sur la figure 1, on peut voir un exemple d'un capteur de température à résistance selon un premier mode de réalisation.

Le capteur est formé sur un substrat et comporte une première piste électrique 1 et une deuxième piste électrique 2 disposées l'une à côté de l'autre et à proximité l'une de l'autre. Les pistes 1 et 2 sont disposées suffisamment proches l'une de l'autre pour que l'on puisse faire l'hypothèse que la valeur de surgravure est sensiblement identique pour les deux pistes.

Dans l'exemple de la figure 1, les deux pistes s'étendent dans la même direction et sont disposées à une distance d. d est typiquement comprise entre quelques $\mu$m et quelques dizaines de $\mu$m. La distance d est à considérer par rapport à la dimension du substrat sur lequel tous les capteurs sont réalisés simultanément. De préférence pour un substrat de diamètre D, $D/d \geq 1000$.

De préférence, la distance d sera choisie telle que $5\mu m \leq d \leq 20\mu m$.

La piste 1 de largeur w1 s'étend entre deux bornes d'extrémité A1 et D1 entre lesquelles un courant i circule lors des mesures. A l'intérieur des bornes d'extrémité, la piste 1 comporte deux bornes de mesure E1 et F1 définissant une zone de mesure 4, et à l'intérieur des bornes de mesure, des bornes de compensation B1 et C1, définissant une zone dite zone de compensation 6.

La piste 2 de largeur w2 s'étend entre deux bornes d'extrémité A2 et D2 entre lesquelles un courant i circule lors des mesures. A l'intérieur des bornes d'extrémité, la piste 2 comporte deux bornes de mesure E2 et F2 définissant une zone de mesure 8, et à l'intérieur des bornes de mesure, des bornes de compensation B2 et C2, définissant une zone dite zone de compensation 10.

La zone de compensation 6 a une longueur $l_6$ et la zone de compensation 10 a un longueur $l_{10}$. $l_6$ et $l_{10}$ sont

sensiblement égales et ont des largeurs différentes. La zone de compensation 6 a une largeur w1 et la zone de compensation 10 a une largeur w2. De préférence la zone de compensation 6 et la zone de compensation 10 sont rectilignes, afin d'éviter des angles géométriques sur lesquels la valeur de surgravure pourrait être sensiblement différente de celle des zones rectilignes. Ces valeurs de surgravure différentes conduiraient ainsi en une approximation de la surgravure sur la longueur totale de la zone de compensation 6, qui serait source d'incertitude.

Les zones de mesure ont une longueur L.

On choisira préférentiellement des longueurs $l_6$ et lio telles que l'écart de valeur de surgravure sur la distance d soit proportionnellement négligeable, typiquement $0.995 \leq l_6/l_{10} \leq 1.005$.

Dans la présente demande, la longueur d'une zone ou d'une piste correspond à la longueur parcourue par le courant électrique. Dans le cas d'une piste droite, la longueur est la longueur de la piste droite, dans le cas d'une piste en créneau, la longueur est la somme des longueurs de chaque portion de ligne droite des créneaux.

La largeur de la zone est la dimension transversale de la piste dans la zone considérée.

De préférence, $l/w1 \geq 15$ et $l/w2 \geq 15$.

De préférence $w1/w2 \geq 1,5$.

Un courant continu i est appliqué entre les bornes A1 et D1.

Des moyens de mesure permettent de mesurer la tension électrique entre les bornes de mesure, et des moyens de mesure permettent de mesurer la tension électrique entre les bornes de compensation. Par exemple des voltmètres sont branchés aux bornes de mesure et aux bornes de compensation.

De préférence la résistance électrique de la zone de mesure est élevée, ce qui permet d'augmenter la précision de mesure. De manière préférée, la résistance de chaque zone de mesure est supérieure ou égale à 1 Ω.

Dans l'exemple représenté et de manière avantageuse, la zone de mesure de chacune des pistes comporte en dehors de la zone de compensation un conducteur en forme de créneau de sorte à augmenter la longueur L de zone de mesure et ainsi augmenter sa résistance, tout en présentant une certaine compacité. Toute autre forme permettant d'augmenter la résistance électrique est envisageable, par exemple une forme en dent de scie ou en spirale. On peut également envisager de réaliser de longues pistes rectilignes, néanmoins le capteur présentera alors un certain encombrement.

Le capteur de la figure 1 met en oeuvre une mesure de type 4-pointes permettant avantageusement de s'affranchir de la résistance des connecteurs entre les bornes des zones B1, C1, E1, F1 et les pointes 1B, 1C, 1E, 1F.

La mise en oeuvre du capteur C1 va maintenant être décrite.

Lors de la fabrication, un lot de n capteurs C1 est fabriqué, les n capteurs sont tous issus d'un même substrat, et ont été individualisés par exemple par découpe. Les pistes 1 et 2 de tous les capteurs ont été réalisées lors de la même phase de gravure, notamment les pistes 1 et 2 d'un même capteur. On fait l'hypothèse que les pistes de tous les capteurs ont la même épaisseur puisqu'elles ont été fabriquées dans la même couche, que les matériaux de toutes les pistes ont la même résistivité $\rho 0$ et que la surgravure des deux pistes 1 et 2 d'un même capteur désignée $\Delta w$ est non uniforme sur la surface du substrat, et donc variable entre deux capteurs issus du même du lot. Cette surgravure est liée au processus de fabrication, plus particulièrement au processus de gravure.

On choisit l'un des capteurs C1 du lot et on considère que la calibration qu'il permet de réaliser s'applique à tous les capteurs du même lot.

On mesure précisément l'épaisseur e et la largeur w de l'une et/ou l'autre des pistes 1 et 2.

Soit la résistivité $\rho_0$ à $T_0$ du matériau des pistes est connue, soit celle-ci est déterminée par exemple de la manière suivante.

On mesure la résistance de calibration $R_0$ de l'une des zones de compensation à la température de calibration $T_0$.et on applique la formule suivante :

$$R_0 = (\rho_0 \times l) / (e \times w).$$

On détermine ensuite la surgravure $\Delta w$ du capteur. Pour cela, lors d'une étape suivante, on détermine les résistances $R_{B1C1}$ et $R_{B2C2}$ et $R_{E1F1}$ et $R_{E2F2}$ entre les bornes B1 et C1; B2 et C2, E1 et F1, E2 et F2 respectivement.

Pour cela, un courant i circule entre les bornes $A_1$ et $D_1$ et entre les bornes $A_2$ et $D_2$ et on mesure les tensions électriques entre les bornes $B_1C_1$ et E1F1 et entre les bornes $B_2C_2$ et $E_2F_2$. On utilise les formules ci-dessous pour déterminer les résistances.

$$R_{B1C1} = V_{B1C1} / i \,; \quad R_{B2C2} = V_{B2C2} / i \,; \quad R_{E1F1} = V_{E1F1} / i \quad et \quad R_{E2F2} = V_{E2F2} / i.$$

A partir des valeurs des résistances $R_{B1C1}$ et $R_{B2C2}$, on détermine la surgravure $\Delta w$ caractéristique du capteur sélectionné, à partir de la formule :

$$R = (\rho \times l) / (e \times (w-\Delta w)).$$

On peut donc écrire :

$$R_{B1C1} = (\rho \times l) / (e \times (w_1-\Delta w))$$

$$R_{B2C2} = (\rho \times l) / (e \times (w_2-\Delta w))$$

Soit

$$\Delta w = ((R_{B2C2} \times w_2) - (R_{B1C1} \times w_1)) / (R_{B2C2} - R_{B1C1}).$$

Généralement, $0,1\mu m \leq \Delta w \leq 5\mu m$ ; plus précisément, pour des capteurs fabriqués en aluminium d'épaisseur $0,7\mu m$, gravés par voie chimique, sur des substrats de diamètre 200mm, $0,5\mu m \leq \Delta w \leq 2\mu m$.

Lors d'une étape suivante, on peut calculer une résistance $R_{0calc}$ à $T_0$ pour chaque résistance de mesure $R_{E1F1}$ et $R_{E2F2}$ pour le capteur sélectionné connaissant $\rho_0$ et la surgravure, suivant la formule :

$$R_{0E1F1\ calc1} = (\rho_0 \times L) / (e \times (w_1-\Delta w))$$

et

$$R_{0E2F2calc2} = (\rho_0 \times L) / (e \times (w_2-\Delta w)).$$

On dispose alors des valeurs de tous les paramètres de la formule $R = R_{0calc}(1+\alpha\ (T-T_0))$, sachant que $\alpha$ est caractéristique du matériau. Il est alors possible de calculer T.

On peut utiliser soit la formule $R_{E1F1} = R_{0E\ calc1}\ (1+\alpha\ (T-T_0))$, et on obtient $(T-T_0) = ((R_{E1F1} / R_{0E1F1\ calc1}) - 1) / a$ ; soit la formule $R_{E2F2} = R_{0E2F2calc2}\ (1+\alpha\ (T-T_0))$, et on obtient $(T-T_0) = ((R_{E2F2}/ R_{0E2F2calc2}) -1) / \alpha$.

De manière avantageuse, on calcule $T-T_0$ à partir des deux mesures de résistance $R_{E1F1}$ et $R_{E2F2}$, ce qui permet d'améliorer encore la précision du capteur.

La valeur de $\rho_0$ connue ou déterminée ci-dessus s'applique à tous les capteurs du lot.

Pour chaque capteur, la mesure de la température s'effectue de la manière suivante après la phase de calibration appliquée à un seul capteur permettant de connaître $R_0$ et $\rho_0$:

- on mesure les résistances $R_{E1F1}$ et $R_{B1C1}$ et/ou $R_{E2F2}$ et $R_{B2C2}$,
- on calcule la valeur de surgravure $\Delta w$ spécifique,
- on calcule les valeurs de $R_{0calc1}$ et/ou $R_{0calc2}$,
- on peut ensuite calculer T à partir des formules :

$$(T-T_0) = ((R_{E1F1} / R_{0\ calc1}) - 1) / \alpha\ et/ou\ (T-T_0) = ((R_{E2F2} / R_{0\ calc2}) - 1) / \alpha.$$

La détermination de la surgravure et des valeurs $R_{0calc1}$ et/ou $R_{0calc2}$ pour chaque capteur se fait uniquement par mesure de tension et calculs, celle-ci est relativement rapide.

La calibration sur un capteur du lot peut être appliquée aux autres capteurs du lot, évitant une calibration individuelle. Le capteur offre en outre une précision de mesure augmentée puisqu'il intègre le calcul de sa propre surgravure, et le temps de fabrication d'un grand nombre de capteurs est réduit.

Les mesures de tension et les calculs peuvent être réalisés par une unité de commande intégrée au capteur sur le substrat, par exemple disposée de manière adjacente aux pistes 1 et 2 et reliée aux bornes par des connecteurs formés par des fils ou des pistes formés sur le substrat

Sur la figure 2, on peut voir un autre exemple de capteur C1' selon le premier mode de réalisation.

Le capteur C1' diffère du capteur C1 en ce que la mesure des résistances $R_{E1F1}$ et $R_{E2F2}$ est réalisée en mesurant la tension aux bornes de compensation B1 et C1 et B2 et C2, et aux bornes d'extrémité A et D.

On réalise un mesure 4-pointes pour le segment entre les bornes B1 et C1 et B2 et C2, et une mesure 2-pointes entre les bornes $A_1$ et $D_1$ et entre les bornes $A_2$ et $D_2$.

La mise en oeuvre du capteur C1', i.e. la détermination de $\rho 0$ si celui-ci n'est pas connue, de la surgravure $\Delta w$ et des résistances $R_{0calc}$ est similaire à celle du capteur C1.

On effectue une mesure précise de e, l et w1 et w2.

On détermine $R_{B1C1}$ et $R_{B2C2}$ à partir de mesures de $V_{B1C1}$ et $V_{B2C2}$, puis on calcule $\Delta w$. On détermine également $R_{A1D1}$ et $R_{A2D2}$ à partir de la mesure entre $A_1$ et $D_1$ et entre $A_2$ et $D_2$.

On détermine ensuite les résistances de calibrations $R_{0calc1}$ et $R_{0calc2}$ pour chaque résistance de mesure entre les bornes entre $A_1$ et $D_1$ et entre $A_2$ et $D_2$.

Enfin on calcule $T-T_0$ en utilisant à nouveau les valeurs de $R_{A1D1}$ et $R_{A2D2}$.

Le capteur C1' présente l'avantage de ne requérir que 4 connecteurs pour le capteur, alors que le capteur C1 requiert 6 connecteurs. Néanmoins il présente une précision plus faible du fait de la mesure de type 2-pointes, qui ne permet pas de s'affranchir des résistances de connexion aux bornes A1 et D1 et A2 et D2.

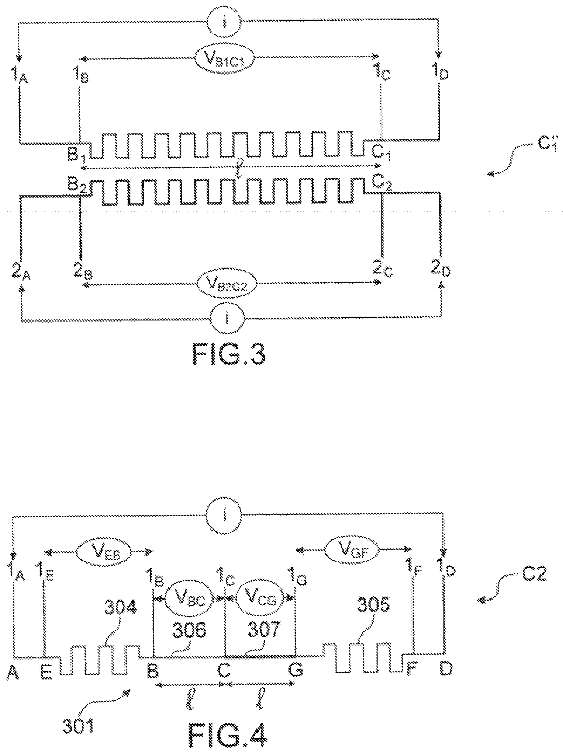

Sur la figure 3, on peut voit un autre exemple de capteur C1" selon le premier mode de réalisation.

Le capteur C1" diffère du capteur C1' en ce que la zone de compensation et la zone de mesure sont confondues. Dans cet exemple elles sont définies d'une part entre les bornes B1 et C1 et d'autre part entre les bornes B2 et C2. Dans cet exemple, la zone de mesure et de compensation est formée uniquement de créneaux, ce qui permet d'obtenir des résistances $R_{B1C1}$ et $R_{B2C2}$ élevées permettant d'augmenter la précision de mesure. En variante, la zone de mesure et de compensation pourrait être rectiligne ou alors comporter une ou plusieurs portions rectilignes et des portions en créneaux ou toute autre forme.

On réalise une mesure de type 4-pointes des résistances $R_{B1C1}$ et $R_{B2C2}$ pour déterminer à la fois la surgravure et la température T.

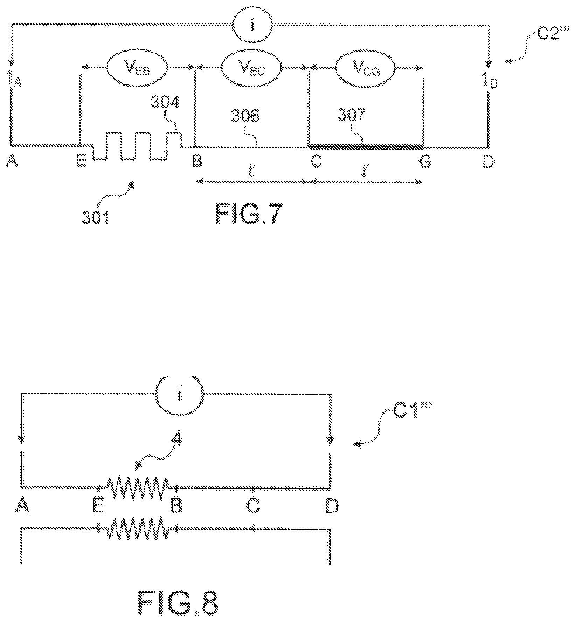

Sur la figure 8, on peut voir un exemple d'un autre circuit C1''' selon le deuxième exemple de réalisation (seule l'une des pistes est représentée), dans lequel une seule zone de mesure 4 a été conservée par piste, permettant de simplifier le circuit et de faire l'économie de deux connecteurs, tout en conservant l'avantage de mesures 4-pointes.

Sur la figure 4, on peut voir un exemple d'un capteur de température C2 selon un deuxième mode de réalisation, dans lequel le capteur comporte une seule ligne conductrice, les deux zones de mesure et les zones de compensation sont électriquement en série.

Le capteur C2 comporte une ligne conductrice 301 s'étendant entre deux bornes d'extrémité A et D entre lesquelles un courant i circule lors des mesures. A l'intérieur des bornes d'extrémité, la piste 301 comporte trois bornes de compensation B, C et G définissant une zone de compensation 306 entre les bornes B et C et une zone de compensation 307 entre les bornes C et G et deux bornes de mesure E, F définissant chacune avec les bornes B et G des zones de mesure 304 et 305.

Dans cet exemple, les zones de mesure 304 et 305 entre les bornes E et B et entre les bornes G et F comportent avantageusement des créneaux afin d'augmenter la résistance électrique de ces zones. Pour le capteur C2, à l'inverse du capteur C1 on définit deux zones de mesure distinctes des zones de compensation car la largeur de la piste 301 varie entre E et F.

Les zones de compensation 306 et 307 ont sensiblement la même longueur l et des largeurs w1, w2 respectivement différentes.

Comme pour le capteur selon le premier mode de réalisation, de préférence, $l/w1 \geq 15$ et $l/w2 \geq 15$, et de préférence $w1/w2 \geq 1,5$.

Le capteur de la figure 4 met en oeuvre une mesure de type 4-pointes permettant avantageusement de s'affranchir de la résistance des lignes de connexion entre les bornes des zones B, C, G, E, F et les pointes 1B, 1C, 1G, 1E, 1F où les tensions sont effectivement mesurées.

La mise en oeuvre du capteur C2 va maintenant être décrite. Comme pour le capteur C1 on choisit un capteur d'un lot de capteurs issus d'un même substrat.

On fait l'hypothèse que les pistes de tous les capteurs d'un même lot ont la même épaisseur puisqu'elles ont été fabriquées dans la même couche, que les matériaux de toutes les pistes ont la même résistivité $\rho 0$. La surgravure désigné $\Delta w$ entre deux zones de compensation 306 et 307 d'une même piste est spécifique à un capteur.

On choisit l'un des capteurs C2 du lot et on considère que la calibration qu'il permet de réaliser s'applique à tous les capteurs C2 de ce même lot.

Soit la résistivité $\rho_0$ à $T_0$ du matériau des pistes est connue, soit celle-ci est déterminée par exemple de la manière suivante.

On mesure précisément l'épaisseur e et la largeur w de l'une ou l'autre des zones 306 et 307, puis on détermine $\rho_0$ en mesurant $R_0$ à la température $T_0$, en appliquant la formule suivante :

$$R_0 = (\rho_0 \times l) / (e \times w)$$

Pour effectuer une mesure de température après la phase de calibration appliquée à un seul capteur du lot, on détermine par ailleurs les résistances $R_{BC}$, $R_{CG}$ et $R_{GF}$ et/ou $R_{BE}$. suivant la formule : $R = V/i$ en appliquant un courant i connu entre les bornes A et D et en mesurant les tensions aux bornes des résistances, soit :

$$R_{BC} = V_{BC} / i \; ; \quad R_{CG} = V_{CG} / i \; ; \quad R_{GF} = V_{GF} / i \; \text{ et } R_{BE} = V_{BE} / i.$$

A partir des valeurs de résistances $R_{BC}$ et $R_{CG}$, il est possible de déterminer la surgravure $\Delta w$.

On utilise les formules $R_{BC} = (\rho \times l) / (e \times (w_1 - \Delta w))$ et $R_{CG} = (\rho \times l) / (e \times (w_2 - \Delta w))$.

Soit :

$$\Delta w = ((R_{CG} \times w_2) - (R_{BC} \times w_1)) / (R_{CG} - R_{BC}).$$

On peut alors calculer la résistance $R_{0\,GF\,calc}$ pour la résistance de la zone de mesure entre les bornes G et F à $T_0$ .

$R_{0\,GF\,calc} = (\rho_0 \times L) / (e \times (w - \Delta w))$ avec L longueur de la piste de largeur w, mesurée entre les bornes G et F

On peut également calculer la résistance $R_{0\,EB\,calc}$ à $T_0$ de la zone de mesure entre les bornes E et B avec la formule :

$R_{0\,EB\,calc} = (\rho_0 \times L) / (e \times (w - \Delta w))$ avec L longueur de la piste de largeur w, mesurée entre les bornes E et B

Les résistances entre GF et EB sont calculées car la largeur de la piste est sensiblement constante.

On peut alors déterminer la température T suivant la formule (1) appliquée à la résistance de mesure [GF]:

$$R_{GF} = R_{0\,GF\,calc} (1 + \alpha (T - T_0)).$$

$$(T - T_0) = ((R_{GF} / R_{0\,GF\,calc}) - 1) / \alpha$$

Alternativement ou de manière additionnelle, on peut également déterminer la température T par la résistance du segment [EB], ou de manière redondante sur les segments [GF] et [EB].

Pour chaque capteur du lot, on réutilise la valeur de $R_0$ et de $\rho_0$. Ensuite on détermine par ailleurs les résistances $R_{BC}$, $R_{CG}$ et $R_{GF}$ et/ou $R_{EB}$, on détermine la surgravure $\Delta w$ de ce capteur, on calcule ensuite $R_{0\,GF\,calc}$ et/ou $R_{0\,EB\,calc}$. On peut alors calculer $T_0$.

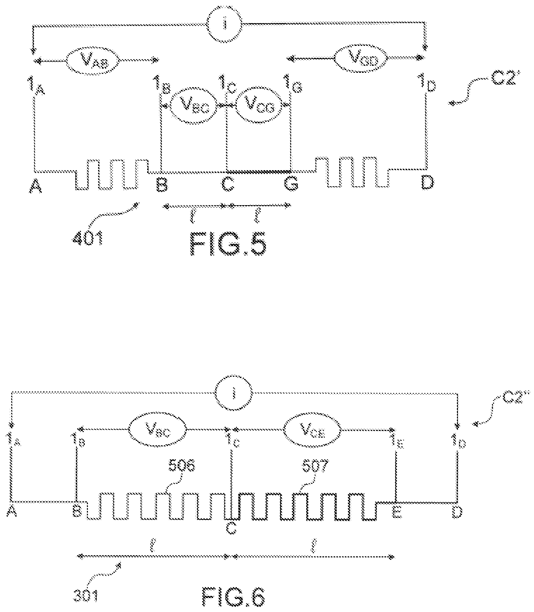

Sur la figure 5, on peut voir un autre exemple de réalisation d'un capteur C2' selon le deuxième mode de réalisation.

Le capteur C2' diffère du capteur C2 en ce que la mesure des résistances $R_{AB}$ et $R_{GD}$, utilise une mesure de type 2-pointes.

La ligne 401 est identique à la ligne 301 du capteur C2. Les moyens de mesure sont tels qu'ils mesurent la tension aux bornes de compensation B et C, et C et G, et aux bornes d'extrémité A et D.

On réalise une mesure 4-pointes pour les segments entre les bornes B et C et C et G, et une mesure 2-pointes entre les bornes A et D.

La mise en oeuvre du capteur C2', i.e. la détermination de $\rho_0$ sur un capteur du lot, le calcul de la surgravure $\Delta w$ et des résistances $R_0$, est similaire à celle du capteur C2.

On connaît $\rho_0$ ou on détermine $\rho_0$ par une mesure précise de e, I et w1 ou w2.

On détermine $R_{BC}$ et $R_{CG}$ à partir de mesures de $V_{BC}$ et $V_{CG}$, puis on calcule $\Delta w$.

On peut alors déterminer la résistance $R_{0GDcalc}$ et/ou $R_{0ABcalc}$, i.e. les résistances $R_{GDcalc}$ et/ou $R_{ABcalc}$. à $T_0$,

Enfin on calcule $T-T_0$ en utilisant à nouveau les valeurs de $R_{GD}$ et/ou $R_{AB}$.

Le capteur C2' présente l'avantage de ne requérir que 5 connecteurs pour le capteur, alors que le capteur C2 requiert 7 connecteurs. Néanmoins il présente une précision plus faible du fait de la mesure de type 2-pointes qui ne permet pas de s'affranchir des résistances de connexion aux bornes A et D.

Sur la figure 7, on peut voir un exemple d'un autre circuit C2''' selon le deuxième exemple de réalisation, dans lequel seule la zone de mesure 304 a été conservée, permettant de simplifier le circuit et de faire l'économie d'un connecteur, tout en conservant l'avantage de mesures 4-pointes.

Sur la figure 6, on peut voir un exemple d'un autre circuit C2" selon le deuxième exemple de réalisation, dans lequel les zones de mesure et les zones de compensation sont confondues. Les zones de mesure et les zones de compensation ont la même longueur I.

Le capteur comporte une piste 501 et des bornes d'extrémité A et D, et des bornes B, C et E définissant deux à deux les zones de mesure et de compensation 506, 507.

Cet exemple de circuit présente l'avantage de ne nécessiter que 5 connecteurs par capteur, tout en bénéficiant de la précision de mesures 4-pointes

Dans cet exemple et de manière préférée, les segments de ligne entre les bornes BC et CE sont formées uniquement de créneaux, ce qui permet d'obtenir des résistances électriques $R_{BC}$ et $R_{CE}$ de valeurs élevées permettant d'augmenter la précision de mesure. En variante, la zone de mesure et de compensation pourrait être rectiligne ou alors comporter une ou plusieurs portions rectilignes et des portions en créneaux ou de toute autre forme.

Les segments de lignes entre BC et CE sont de même longueur.

Le segment de ligne CE a une largeur w2 plus grande que la largeur w1 du segment de ligne BC.

On réalise une mesure de type 4-pointes des résistances $R_{BC}$ et $R_{CE}$ pour déterminer à la fois la surgravure et la température T.

On mesure précisément l'épaisseur e et la largeur w de l'une ou l'autre des pistes 506 et 507.

Soit $\rho_0$ à $T_0$ est connu, soit on détermine $\rho_0$ du matériau à la température $T_0$, puis on détermine $\rho_0$ en mesurant $R_0$ à la température $T_0$, en appliquant la formule suivante :

$$R_0 = (\rho_0 \times I) / (e \times w)$$

On détermine par ailleurs les résistances $R_{BC}$, $R_{CE}$ suivant la formule : R = V/i en appliquant un courant i connu entre les bornes A et D, soit :

$$R_{BC} = V_{BC} / i \; ; \; R_{CE} = V_{CE} / i$$

A partir des valeurs de résistances $R_{BC}$ et $R_{CE}$, il est possible de déterminer la surgravure $\Delta w$.

On utilise les formules :

$$R_{BC} = (\rho \times I) / (e \times (w_1 - \Delta w)) \text{ et } R_{CE} = (\rho \times I) / (e \times (w_2 - \Delta w))$$

Soit :

$$\Delta w = ((R_{CE} \times w_2) - (R_{BC} \times w_1)) / (R_{CE} - R_{BC})$$

On peut alors calculer la résistance de « calibration » pour la résistance de la zone de mesure 506 (segment BC) à $T_0$.

$$R_{0\,BC\,calc} = (\rho_0 \times I) / (e \times (w_1 - \Delta w))$$

On peut également calculer la résistance de « calibration » pour la résistance de la zone de mesure 507 (segment CE) à $T_0$.

$$R_{0\ CE\ calc} = (\rho_0 \times l) / (e \times (w2 - \Delta w))$$

On peut alors déterminer la température T suivant la formule (1) appliquée à la résistance de mesure [BC] :

$$R_{BC} = R_{0\ BC\ calc} (1 + \alpha\ (T - T_0))$$

$$(T - T_0) = ((R_{BC} / R_{0\ BC\ calc}) - 1) / \alpha$$

Alternativement ou de manière additionnelle, on peut également déterminer la température T par la résistance du segment [CE], ou de manière redondante sur les segments [BC] et [CE].

Comme pour les autres exemples de réalisation, pour les autres capteurs du lot, on réutilise $R_0$ et $\rho_0$ pour calculer $R_{0\ BC\ calc}$ et calculer T.

Le capteur C2" présente une grande compacité.

De manière préférée, on cherche à avoir des zones de mesure ayant des résistances électriques de valeur importante, de préférence supérieure ou égale à 1 $\Omega$.

La présente invention ne se limite pas à un capteur de température mettant en oeuvre le silicium pour former le ou les pistes conductrices. Le silicium est communément utilisé dans les procédés microélectroniques et présente une linéarité dans la gamme de température d'intérêt dans le domaine de la biologie. Néanmoins tout autre matériau conducteur électrique présentant une variation linéaire de sa résistance électrique avec la température dans la gamme de température d'intérêt peut être utilisé.

En particulier des métaux comme les composés d'aluminium (Al, AlSi, AlCu), ainsi que le platine, peuvent être avantageusement choisis pour simplifier l'empilement technologique. La présente invention devient alors particulièrement avantageuse dans le cas de gravure chimique par voie humide de ces matériaux, présentant typiquement une dispersion de surgravure sur un même lot relativement importante au regard de la largeur w des capteurs, par exemple supérieure à 10%.

De manière préférée, les capteurs présentent des zones de compensation les plus proches possibles l'une de l'autre, afin de garantir l'hypothèse que la surgravure $\Delta w$ est la même pour les deux zones de compensation. Néanmoins, on peut envisager comme variantes des capteurs des figures 4 et 5, des capteurs dans lesquels les zones de mesure et les zones de compensation sont alternées, voire dans lesquels les zones de mesure.

La structure de capteur de température permet de s'affranchir de l'erreur liée à la surgravure et à sa dispersion lors de l'étape de structuration de la résistance de mesure.

Elle permet de calibrer tous les capteurs d'un lot en calibrant un seul capteur issu d'un lot de fabrication.

Le capteur peut atteindre une très bonne précision de mesure sur la base d'une seule calibration par lot, $\leq 1\%$ et pouvant atteindre 0,3%, soit de 0,1°C à 0,5°C sur la gamme de température considérée. Par comparaison, un calcul de température sans compensation de surgravure, toujours sur la base d'une seule calibration par lot, serait limitée par la valeur relative de cette surgravure par rapport à la largeur des pistes de mesure, pouvant aller jusqu'à plusieurs dizaines de pourcents (soit de 5°C à 10°C). Une précision comparable à celle atteinte par un capteur selon l'invention, ne pourrait alors être atteinte qu'en calibrant chaque capteur très précisément, tout en relâchant les contraintes sur le procédé de fabrication, puisqu'on peut compenser la surgravure. Grâce à l'invention, on peut envisager d'utiliser des gravures présentant une grande dispersion en termes de surgravure, par exemple la résistance de mesure peut être gravée par gravure par voie humide en immersion, puisque la surgravure sera déterminée et prise en compte pour la détermination de la température. Cette technique de gravure n'était généralement pas utilisée pour réaliser des capteurs de température à résistance.

En outre, cette auto-compensation permet d'éviter une étape de cartographie après fabrication de la largeur réelle des résistances de chaque capteur par relevé et mesure microscopique.

Chaque puce peut ainsi comporter ainsi son propre capteur intégré à auto-compensation de surgravure.

**Revendications**

1. Capteur de température à résistance (C2, C2', C2") comportant au moins une piste conductrice électrique (301, 401, 501) entre une première borne (A) et une deuxième borne (D), lesdites bornes étant destinées à être connectées à une source de courant, ladite piste conductrice (301) comportant au moins une première zone de compensation de surgravure (306, 506) et une deuxième zone de compensation de surgravure (307, 507), les première et deuxième zones de compensation de surgravure ayant sensiblement la même longueur (l) conductrice et ayant des largeurs (w1, w2) différentes, ladite piste conductrice (301, 401, 501) comportant également au moins une première zone de mesure de température (304, 506) des moyens configurés pour déterminer les résistances électriques des première (306, 506) et deuxième (307, 507) zones de compensation de surgravure, pour déterminer la surgravure entre le première (306, 506) et deuxième (307, 507) zone de compensation de surgravure à partir des valeurs des résistances électriques des première (306, 506) et deuxième (307, 507) zones de compensation de surgravure, pour calculer une résistance de la première zone de mesure de température (304, 506) à une température de calibration à partir de la valeur de la surgravure, pour déterminer la résistance de la première zone de mesure de température (304, 506) à la température à mesurer et pour calculer la température à partir de la résistance de la première zone de mesure de température (304, 506) à la température à mesurer,

2. Capteur de température selon la revendication 1, dans lequel ladite piste comporte une deuxième zone de mesure de température, et dans lequel les moyens de mesure sont configurés pour calculer la résistance de la deuxième zone de mesure de température à une température de calibration à partir de la valeur de la surgravure, pour mesurer la résistance de la deuxième zone de mesure de température à la température à mesurer et pour calculer la température à partir de la résistance de la deuxième zone de mesure de température à la température à mesurer.

3. Capteur de température selon la revendication 2, dans lequel la première zone de compensation de surgravure et la première zone de mesure sont confondues, et la deuxième zone de compensation de surgravure et la deuxième zone de mesure sont confondues.

4. Capteur de température selon la revendication 1, dans lequel les première et deuxième zones de mesure ont sensiblement la même longueur conductrice et la même largeur.

5. Capteur de température à résistance (C1, C1', C1") comportant une première piste conductrice électrique (1) et une deuxième piste conductrice électrique (2), chacune s'étendant entre une première borne (A1, A2) et une deuxième borne (D1, D2) destinées à être connectées à une source de courant, la première piste conductrice (1) comportant une première zone de compensation de surgravure (6) et au moins une première zone de mesure de température (4), la deuxième piste (2) comportant une deuxième zone de compensation de surgravure (10) et au moins une deuxième zone de mesure de température (8), les première (6) et deuxième (10) zones de compensation de surgravure ayant sensiblement la même longueur conductrice (l6, l10) et des largeurs conductrices (w1, w2) différentes, dans lequel les première (1) et deuxième (2) pistes sont disposées à proximité l'une de l'autre, ledit capteur (C1, C1', C1") comportant également des moyens de mesure configurés pour déterminer les résistances électriques des première (6) et deuxième (10) zones de compensation de surgravure, pour déterminer la surgravure de première (6) et deuxième (10) zone de compensation de surgravure à partir des valeurs des résistances électriques des première (6) et deuxième (10) zones de compensation de surgravure, pour calculer la résistance d'au moins la première zone de mesure de température (4) à une température de calibration à partir de la valeur de la surgravure, pour déterminer la résistance de la première zone de mesure de température (4) à la température à mesurer et pour calculer la température à partir de la résistance de la première zone de mesure de température (4) à la température à mesurer.

6. Capteur de température selon la revendication précédente, dans lequel les moyens de mesure sont configurés pour calculer la résistance d'au moins la deuxième zone de mesure de température à une température de calibration à partir de la valeur de la surgravure, pour calculer une résistance de la deuxième zone de mesure de température à la température à mesurer et pour calculer la température à partir de la résistance de la deuxième zone de mesure de température à la température à mesurer.

7. Capteur de température selon la revendication 5 ou 6, dans lequel la première piste comporte deux premières zones de mesure de température.

8. Capteur de température selon la revendication 5, 6 ou 7, dont les première et deuxième zones de compensation de surgravure sont parallèles et séparées d'une distance comprise entre 1 $\mu$m et 30 $\mu$m.

9. Capteur de température selon l'une des revendications 6 à 8, dans lequel la première zone de compensation de température et la première zone de mesure de température sont confondues, et la deuxième zone de compensation de température et la deuxième zone de mesure de température sont confondues,

10. Capteur de température selon l'une des revendications précédentes, dans lequel au moins les première et deuxième zones de mesure de température sont conformées pour présenter une longueur conductrice supérieure à la longueur en ligne droite de sorte à présenter une résistance électrique supérieure à la résistance électrique d'une zone en ligne droite.

11. Capteur de température selon l'une des revendications précédentes, dans lequel les premières et deuxièmes zones de mesure de température ont une résistance électrique supérieure ou égale à 1 $\Omega$.

12. Capteur de température selon l'une des revendications précédentes, dans lequel les moyens de mesure sont configurés pour effectuer une mesure quatre pointes.

13. Capteur de température selon l'une des revendications précédentes, dans lequel le rapport entre la longueur d'une zone de compensation de surgravure et sa largeur est supérieur à 15.

14. Capteur de température selon l'une des revendications précédentes, dans lequel le rapport entre les largeurs des première et deuxième zones de compensation de surgravure est supérieur à 1,5.

15. Procédé de mesure de température à partir d'un capteur de température (C1, C1', C1", C2, C2', C2") à résistance selon l'une des revendications précédentes, pour lequel la résistivité du matériau de la au moins une piste conductrice (1, 2, 301, 401) est connue et la valeur de la surgravure a été déterminée, comportant :

   - application d'un courant d'intensité donnée entre les première (A1, A2, A) et deuxième (D1, D2, D) bornes,
   - mesure de la tension aux bornes (E1, B1, C1, A, B, C, E) de la au moins première zone de mesure (4, 304, 506),

   - Calcul de la résistance électrique de la au moins première zone de mesure (4, 304, 506) à la température à mesurer,

   - détermination de la température à partir de la résistance électrique de la au moins première zone de mesure à la température (4, 304, 506) à mesurer, et à partir de la résistance électrique de la au moins première zone de mesure à une température (4, 304, 506) de calibration et de la valeur de la surgravure.

16. Procédé de calibrage d'un lot de capteurs de température à résistance (C1, C1', C1", C2, C2', C2") selon l'une des revendications 1 à 14, réalisés simultanément sur un substrat par des procédés microélectroniques, comportant :

   - Sélection d'un capteur du lot,
   - Mesure de la largeur et de l'épaisseur d'au moins une des zones de compensation de surgravure (6, 10, 306, 307, 506, 507) ou des zones de mesure de température (4, 8, 304, 305, 506, 507),
   - Calcul des résistances des première (6, 306, 506) et deuxième (10, 307, 507) zones de compensation de surgravure pour chaque capteur du lot,
   - Calcul de la surgravure pour chaque capteur du lot à partir des résistances des première (6, 306, 506) et deuxième (10, 307, 507) zones de compensation de surgravure,
   - Calcul d'une résistance de calibration équivalente pour chaque capteur (C1, C1', C1", C2, C2', C2"), à partie de la valeur de surgravure et de la résistivité à la température de calibration,
   - Intégration dans les moyens de traitement de la résistance de calibration équivalente.

17. Procédé de fabrication d'un lot de capteurs de température à résistance (C1, C1', C1", C2, C2', C2") selon l'une des revendications 1 à 14, comportant :

   - Réalisation du capteur (C1, C1', C1", C2, C2', C2") par un procédé microélectronique pouvant comprendre des étapes de dépôt de couches, de photolithographie et de gravure,
   - Application du procédé de calibrage selon la revendication précédente.

**Patentansprüche**

1. Widerstandstemperatursensor (C2, C2', C2"), mindestens eine elektrische Leiterbahn (301, 401, 501) zwischen einer ersten Klemme (A) und einer zweiten Klemme (D) beinhaltend, wobei die Klemmen vorgesehen sind, um mit einer Stromquelle verbunden zu werden, wobei die Leiterbahn (301) mindestens einen ersten Überätzungskompensationsbereich (306, 506) und einen zweiten Überätzungskompensationsbereich (307, 507) beinhaltet, wobei der erste und der zweite Überätzungskompensationsbereich im Wesentlichen dieselbe leitende Länge (l) aufweisen, und unterschiedliche Breiten (w1, w2) aufweisen, wobei die Leiterbahn (301, 401, 501) auch mindestens einen ersten Temperaturmessbereich (304, 506) von Mitteln beinhaltet, die konfiguriert sind, um die elektrischen Widerstände des ersten (306, 506) und des zweiten (307, 507) Überätzungskompensationsbereichs zu bestimmen, um die Überätzung zwischen dem ersten (306, 506) und dem zweiten (307, 507) Überätzungskompensationsbereich ausgehend von den Werten der elektrischen Widerstände des ersten (306, 506) und des zweiten (307, 507) Überätzungskompensationsbereichs zu bestimmen, um einen Widerstands des ersten Temperaturmessbereichs (304, 506) ausgehend vom Überätzungswert bei einer Kalibrierungstemperatur zu berechnen, um den Widerstand des ersten Temperaturmessbereichs (304, 506) bei der zu messenden Temperatur zu bestimmen und um die Temperatur ausgehend vom Widerstand des ersten Temperaturmessbereichs (304, 506) bei der zu messenden Temperatur zu berechnen.

2. Temperatursensor nach Anspruch 1, wobei die Bahn einen zweiten Temperaturmessbereich beinhaltet, und wobei die Messmittel konfiguriert sind, um den Widerstand des zweiten Temperaturmessbereichs ausgehend vom Überätzungswert bei einer Kalibrierungstemperatur zu berechnen, um den Widerstand des zweiten Temperaturmessbereichs bei der zu messenden Temperatur zu messen und um die Temperatur ausgehend vom Widerstand des zweiten Temperaturmessbereichs bei der zu messenden Temperatur zu berechnen.

3. Temperatursensor nach Anspruch 2, wobei der erste Überätzungskompensationsbereich und der erste Messbereich zusammenfallen und der zweite Überätzungskompensationsbereich und der zweite Messbereich zusammenfallen.

4. Temperatursensor nach Anspruch 1, wobei der erste und der zweite Messbereich im Wesentlichen die gleiche leitende Länge und Breite aufweisen.

5. Widerstandstemperatursensor (C1, C1', C1"), eine erste elektrische Leiterbahn (1) und eine zweite elektrische Leiterbahn (2) beinhaltend, die sich jeweils zwischen einer ersten Klemme (A1, A2) und einer zweiten Klemme (D1, D2) erstrecken, die vorgesehen sind, um mit einer Stromquelle verbunden zu werden, wobei die erste Leiterbahn (1) einen ersten Überätzungskompensationsbereich (6) und mindestens einen ersten Temperaturmessbereich (4) beinhaltet, wobei die zweite Bahn (2) einen zweiten Überätzungskompensationsbereich (10) und mindestens einen zweiten Temperaturmessbereich (8) beinhaltet, wobei der erste (6) und der zweite (10) Überätzungskompensationsbereich im Wesentlichen die gleiche leitende Länge (l6, l10) und unterschiedliche leitende Breiten (w1, w2) aufweisen, wobei die erste (1) und die zweite (2) Bahn nahe beieinander angeordnet sind, wobei der Sensor (C1, C1', C1") auch Messmittel beinhaltet, die konfiguriert sind, um die elektrischen Widerstände der ersten (6) und zweiten (10) Überätzungskompensationsbereiche zu bestimmen, um die Überätzung der ersten (6) und zweiten (10) Überätzungskompensationsbereiche ausgehend von den Werten der elektrischen Widerstände der ersten (6) und zweiten (10) Überätzungskompensationsbereiche zu bestimmen, um den Widerstands von dem mindestens ersten Temperaturmessbereich (4) ausgehend vom Überätzungswert bei einer Kalibrierungstemperatur zu berechnen, um den Widerstand des ersten Temperaturmessbereichs (4) bei der zu messenden Temperatur zu bestimmen und um die Temperatur ausgehend vom Widerstand des ersten Temperaturmessbereichs (4) bei der zu messenden Temperatur zu berechnen.

6. Temperatursensor nach dem vorhergehenden Anspruch, wobei die Messmittel konfiguriert sind, um den Widerstand von dem mindestens zweiten Temperaturmessbereich ausgehend vom Überätzungswert bei einer Kalibrierungstemperatur zu berechnen, um einen Widerstand des zweiten Temperaturmessbereichs bei der zu messenden Temperatur zu berechnen und um die Temperatur ausgehend vom Widerstand des zweiten Temperaturmessbereichs bei der zu messenden Temperatur zu berechnen.

7. Temperatursensor nach Anspruch 5 oder 6, wobei die erste Bahn zwei erste Temperaturmessbereiche beinhaltet.

8. Temperatursensor nach Anspruch 5, 6 oder 7, dessen erste und zweite Überätzungskompensationsbereiche parallel sind und um einen Abstand zwischen 1 $\mu$m und 30 $\mu$m voneinander getrennt.

9. Temperatursensor nach einem der Ansprüche 6 bis 8, wobei der erste Temperaturkompensationsbereich und der erste Temperaturmessbereich zusammenfallen und der zweite Temperaturkompensationsbereich und der zweite Temperaturmessbereich zusammenfallen.

10. Temperatursensor nach einem der vorhergehenden Ansprüche, wobei mindestens der erste und der zweite Temperaturmessbereich konfiguriert sind, um eine leitende Länge zu präsentieren, die größer ist als die Länge in gerader Linie, so dass sie einen elektrischen Widerstand präsentieren, der größer ist als der elektrische Widerstand eines Bereichs in gerader Linie.

11. Temperatursensor nach einem der vorhergehenden Ansprüche, wobei der erste und der zweite Temperaturmessbereich einen elektrischen Widerstand größer oder gleich 1 Ω aufweisen.

12. Temperatursensor nach einem der vorhergehenden Ansprüche, wobei die Messmittel konfiguriert sind, um eine Vierleitermessung durchzuführen.

13. Temperatursensor nach einem der vorhergehenden Ansprüche, wobei das Verhältnis zwischen der Länge eines Überätzungskompensationsbereichs und seiner Breite größer als 15 ist.

14. Temperatursensor nach einem der vorhergehenden Ansprüche, wobei das Verhältnis zwischen den Breiten der ersten und zweiten Überätzungskompensationsbereiche größer als 1,5 ist.

15. Verfahren zur Messung der Temperatur ausgehend von einem Widerstandstemperatursensor (C1, C1', C1", C2, C2', C2") nach einem der vorhergehenden Ansprüche, für den die Resistivität des Materials der mindestens einen Leiterbahn (1, 2, 301, 401) bekannt ist und der Überätzungswert bestimmt wurde, beinhaltend:

   - Anlegen eines Stroms gegebener Stärke zwischen den ersten (A1, A2, A) und zweiten (D1, D2, D) Klemmen,
   - Messung der Klemmenspannung (E1, B1, C1, A, B, C, E) des mindestens ersten Messbereichs (4, 304, 506),
   - Berechnung des elektrischen Widerstands des mindestens ersten Messbereichs (4, 304, 506) bei der zu messenden Temperatur,
   - Bestimmung der Temperatur ausgehend vom elektrischen Widerstand des mindestens ersten Messbereichs bei der zu messenden Temperatur (4, 304, 506), und ausgehend vom elektrischen Widerstand des mindestens ersten Messbereichs bei einer Kalibrierungstemperatur (4, 304, 506) und dem Überätzungswert.

16. Verfahren zur Kalibrierung einer Serie von Widerstandstemperatursensoren (C1, C1', C1", C2, C2', C2") nach einem der Ansprüche 1 bis 14, die gleichzeitig auf einem Substrat durch mikroelektronische Verfahren realisiert werden, beinhaltend:

   - Auswahl eines Sensors aus der Serie,
   - Messung der Breite und Dicke mindestens eines der Überätzungskompensationsbereiche (6, 10, 306, 307, 506, 507) oder Temperaturmessbereiche (4, 8, 304, 305, 506, 507),
   - Berechnung der Widerstände der ersten (6, 306, 506) und zweiten (10, 307, 507) Überätzungskompensationsbereiche für jeden Sensor der Serie,
   - Berechnung der Überätzung für jeden Sensor der Serie ausgehend von den Widerständen der ersten (6, 306, 506) und zweiten (10, 307, 507) Überätzungskompensationsbereiche,
   - Berechnung eines äquivalenten Kalibrierungswiderstands für jeden Sensor (C1, C1', C1", C2, C2', C2") ausgehend vom Überätzungswert und der Resistivität bei der Kalibrierungstemperatur,
   - Integration des äquivalenten Kalibrierungswiderstands in die Verarbeitungsmittel.

17. Verfahren zur Herstellung einer Serie von Widerstandstemperatursensoren (C1, C1', C1", C2, C2', C2") nach einem der Ansprüche 1 bis 14, beinhaltend:

   - Realisation des Sensors (C1, C1', C1", C2, C2', C2") durch ein mikroelektronisches Verfahren, das Schritte der Schichtabscheidung, der Photolithographie und der Ätzung umfassen kann,
   - Anwendung des Kalibrierverfahrens nach dem vorhergehenden Anspruch.

**Claims**

1. A resistance temperature sensor (C2, C2', C2") including at least one electrical conductive track (301, 401, 501) between a first terminal (A) and a second terminal (D), said terminals being intended to be connected to a current source, said conductive track (301) including at least one first overetch compensation zone (306, 506) and a second overetch compensation zone (307, 507), the first and second overetch compensation zones substantially having the same conductive length (l) and having different widths (w1, w2), said conductive track (301, 401, 501) also including at least one first temperature measurement zone (304, 506), means configured to determine the electrical resistances of the first (306, 506) and second (307, 507) overetch compensation zones, to determine the overetch between the first (306, 506) and second (307, 507) overetch compensation zones from the values of the electrical resistances of the first (306, 506) and second (307, 507) overetch compensation zones, to calculate a resistance of the first temperature measurement zone (304, 506) at a calibration temperature from the value of the overetch, to determine the resistance of the first temperature measurement zone (304, 506) at the temperature to be measured and to calculate the temperature from the resistance of the first temperature measurement zone (304, 506) at the temperature to be measured.

2. The temperature sensor according to claim 1, wherein said track includes a second temperature measurement zone, and wherein the measurement means are configured to calculate the resistance of the second temperature measurement zone at a calibration temperature from the value of the overetch, to measure the resistance of the second temperature measurement zone at the temperature to be measured and to calculate the temperature from the resistance of the second temperature measurement zone at the temperature to be measured.

3. The temperature sensor according to claim 2, wherein the first overetch compensation zone and the first measurement zone are the same, and the second overetch compensation zone and the second measurement zone are the same.

4. The temperature sensor according to claim 1, wherein the first and second measurement zones substantially have the same conductive length and the same width.

5. A resistance temperature sensor (C1, C1', C1") including a first electrical conductive track (1) and a second electrical conductive track (2), each extending between a first terminal (A1, A2) and a second terminal (D1, D2) intended to be connected to a current source, the first conductive track (1) including a first overetch compensation zone (6) and at least one first temperature measurement zone (4), the second track (2) including a second overetch compensation zone (10) and at least one second temperature measurement zone (8), the first (6) and second (10) overetch compensation zones substantially having the same conductive length (l6, l10) and different conductive widths (w1, w2), wherein the first (1) and second (2) tracks are disposed in proximity to each other, said sensor (C1, C1', C1") also including measurement means configured to determine the electrical resistances of the first (6) and second (10) overetch compensation zones, to determine the overetch of the first (6) and second (10) overetch compensation zones from the values of the electrical resistances of the first (6) and second (10) overetch compensation zones, to calculate the resistance of at least the first temperature measurement zone (4) at a calibration temperature from the value of the overetch, to determine the resistance of the first temperature measurement zone (4) at the temperature to be measured and to calculate the temperature from the resistance of the first temperature measurement zone (4) at the temperature to be measured.

6. The temperature sensor according to the preceding claim, wherein the measurement means are configured to calculate the resistance of at least the second temperature measurement zone at a calibration temperature from the value of the overetch, to calculate a resistance of the second temperature measurement zone at the temperature to be measured and to calculate the temperature from the resistance of the second temperature measurement zone at the temperature to be measured.

7. The temperature sensor according to claim 5 or 6, wherein the first track includes two first temperature measurement zones.

8. The temperature sensor according to claim 5, 6 or 7, the first and second overetch compensation zones of which are parallel and separated by a distance of between 1 μm and 30 μm.

9. The temperature sensor according to one of claims 6 to 8, wherein the first temperature compensation zone and the first temperature measurement zone are the same, and the second temperature compensation zone and the second temperature measurement zone are the same.

10. The temperature sensor according to one of the preceding claims, wherein at least the first and second temperature measurement zones are shaped to have a conductive length greater than the straight line length so as to have an electrical resistance greater than the electrical resistance of a straight line zone.

11. The temperature sensor according to one of the preceding claims, wherein the first and second temperature measurement zones have an electrical resistance greater than or equal to 1 $\Omega$.

12. The temperature sensor according to one of the preceding claims, wherein the measurement means are configured to perform a four-point measurement.

13. The temperature sensor according to one of the preceding claims, wherein the ratio of the length of an overetch compensation zone to the width thereof is greater than 15.

14. The temperature sensor according to one of the preceding claims, wherein the ratio of the widths of the first and second overetch compensation zones is greater than 1.5.

15. A method for measuring temperature from a resistance temperature sensor (C1, C1', C1", C2, C2', C2") according to one of the preceding claims, for which the resistivity of the material of the at least one conductive track (1, 2, 301, 401) is known and the value of the overetch has been determined, including:

   - applying a current of a given intensity between the first (A1, A2, A) and second (D1, D2, D) terminals,
   - measuring the voltage at the terminals (E1, B1, C1, A, B, C, E) of the at least first measurement zone (4, 304, 506),
   - calculating the electrical resistance of the at least first measurement zone (4, 304, 506) at the temperature to be measured,
   - determining the temperature from the electrical resistance of the at least first measurement zone (4, 304, 506) at the temperature to be measured, and from the electrical resistance of the at least first measurement zone (4, 304, 506) at a calibration temperature and from the value of the overetch.

16. A method for calibrating a batch of resistance temperature sensors (C1, C1', C1", C2, C2', C2") according to one of claims 1 to 14, carried out simultaneously on a substrate by microelectronic methods, including:

   - selecting a sensor in the batch,
   - measuring the width and the thickness of at least one of the overetch compensation zones (6, 10, 306, 307, 506, 507) or temperature measurement zones (4, 8, 304, 305, 506, 507),
   - calculating the resistances of the first (6, 306, 506) and second (10, 307, 507) overetch compensation zones for each sensor in the batch,
   - calculating the overetch for each sensor in the batch from the resistances of the first (6, 306, 506) and second (10, 307, 507) overetch compensation zones,
   - calculating an equivalent calibration resistance for each sensor (C1, C1', C1", C2, C2', C2"), from the overetch value and from the resistivity at the calibration temperature,
   - integrating the equivalent calibration resistance into the processing means.

17. A method for manufacturing a batch of resistance temperature sensors (C1, C1', C1", C2, C2', C2") according to one of claims 1 to 14, including:

   - making a sensor (C1, C1', C1", C2, C2', C2") by a microelectronic method which can comprise layer deposition, photolithography and etch steps,
   - applying the calibration method according to the preceding claim.

FIG.1

FIG.2

FIG.3

FIG.4

FIG.5

FIG.6

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5623594 A

**Littérature non-brevet citée dans la description**

- **XIAOWEN LIU ; LIN LI ; ANDREW J. MASON.** Thermal Control Microsystem for Protein Characterization and Sensing. *IEEE Biomédical Circuits and Systèmes Conférence,* 2009, 277-280

- **PELED et al.** Quantifying delineation errors in thin film resistors I : Evaluation of line width errors for résistance measurement. *Thin Solid Films,* 1982, L77-L81